# EUROPEAN PATENT APPLICATION

(11) **EP 4 590 067 A1**
(43) Date of publication of application: **23.07.2025**
(21) Application number: 23884757.8
(22) Date of filing: 27.10.2023
(51) Int. Cl.: H04W 76/27

(54) **COMMUNICATION METHOD AND RELATED DEVICE**

(30) Priority: 03.11.2022 CN 202211372337
(71) Applicant: Huawei Technologies Co., Ltd., Shenzhen, Guangdong 518129 (CN)
(72) Inventor: LI, Xiangyu, Shenzhen, Guangdong 518129 (CN); PENG, Wenjie, Shenzhen, Guangdong 518129 (CN)
(74) Representative: Epping - Hermann - Fischer
(86) International application number: PCT/CN2023/127148
(87) International publication number: WO 2024/093825

(57) **Abstract**

This application discloses a communication method and a related device. The method may include: obtaining a first sidelink data radio bearer SL DRB configuration; and determining a CAPC of an SL DRB based on one or more quality of service flows associated with the first SL DRB configuration, where the SL DRB is an SL DRB established based on the first SL DRB configuration. This application can ensure quality of SL-U communication and fairness of transmission for different service requirements.

## Description

This application claims priority to Chinese Patent Application No. 202211372337.6, filed with the China National Intellectual Property Administration on November 3, 2022 and entitled "COMMUNICATION METHOD AND RELATED DEVICE", which is incorporated herein by reference in its entirety.

### TECHNICAL FIELD

This application relates to the field of communication technologies, and in particular, to a communication method and a related device.

### BACKGROUND

In a wireless communication system, data communication may be performed between terminal devices by using a network device (for example, an access network device); or data communication may be directly performed between terminal devices without using a network device. An interface for directly performing data communication between the terminal devices is referred to as a PC5 interface, and a link for directly performing data communication between the terminal devices is referred to as a sidelink (sidelink, SL). Typical application scenarios of sidelink communication include vehicle to everything (vehicle to everything, V2X) and proximity-based services (proximity-based services, ProSe). The vehicle to everything is used as an example. Each vehicle in the vehicle to everything is a terminal device, and data transmission may be directly performed between vehicles through the sidelink without using the network device. In this way, a communication delay can be effectively reduced.

Spectrum resources that can be used for sidelink communication are generally classified into two types: a licensed spectrum and an unlicensed spectrum. The licensed spectrum can be used only by some organizations or operators, and the unlicensed spectrum is a shared spectrum and can be used by different operators or organizations. To fairly use the unlicensed spectrum, before sending data, a device operating in the unlicensed spectrum needs to sense, by using a listen-before-talk (listen-before-talk, LBT) channel contention access mechanism, whether a channel is idle. When the channel is idle, the channel can be occupied and data transmission can be performed.

For unlicensed spectrum-based sidelink (SL-U) communication, a solution for ensuring performance and fairness of entire SL-U communication needs to be explored.

### SUMMARY

Embodiments of this application provide a communication method and a related device, to ensure quality of SL-U communication and fairness of transmission for different service requirements.

According to a first aspect, an embodiment of this application provides a communication method, applied to a terminal device. The method may include: obtaining a first sidelink data radio bearer SL DRB configuration; and determining a CAPC of an SL DRB based on one or more quality of service flows associated with the first SL DRB configuration, where the SL DRB is an SL DRB established based on the first SL DRB configuration.

A CAPC configuration corresponding to an SL DRB used by a UE is delivered by a base station or obtained by using a preconfiguration message. When a plurality of QoS flows are mapped to one SL DRB for transmission, QoS characteristics of the QoS flows may differ greatly, in other words, CAPCs needed for the QoS flows may be different. As a result, the CAPC configuration of the SL DRB may be inappropriate to the CAPCs of the QoS flows, or there is no CAPC configuration corresponding to the SL DRB, affecting performance and fairness of entire SL-U communication. In this embodiment of this application, after obtaining the SL DRB configuration, the UE may determine, based on the one or more QoS flows associated with the SL DRB configuration, the CAPC of the SL DRB established based on the SL DRB configuration. There may be one or more established SL DRBs. Based on this, the UE may properly configure or properly determine, based on the one or more QoS flows, the CAPC corresponding to the SL DRB, to mitigate a problem that quality and fairness of SL-U communication are affected when no CAPC of the SL DRB is configured or a configured CAPC is inappropriate in a network, so as to ensure the quality of SL-U communication and fairness of transmission for different service requirements.

In a possible implementation, there is one SL DRB.

In this embodiment of this application, the UE may determine, based on a plurality of QoS flows, a CAPC corresponding to one SL DRB, to mitigate a problem that quality and fairness of SL-U communication are affected when no CAPC of the SL DRB is configured or a configured CAPC is inappropriate in a network, so as to ensure the quality of SL-U communication and fairness of transmission for different service requirements.

In a possible implementation, there are at least two SL DRBs, and each of the at least two SL DRBs has a different CAPC.

In this embodiment of this application, the UE establishes a plurality of SL DRBs based on the SL DRB configuration, so that transmission of a QoS flow corresponding to a CAPC is actually performed on each SL DRB, to ensure quality of SL-U communication and fairness of transmission for different service requirements.

In a possible implementation, the method further includes: determining, as the CAPC of the SL DRB, a target CAPC in one or more CAPCs corresponding to the one or more quality of service flows associated with the first SL DRB configuration.

In this embodiment of this application, the UE may determine, from a plurality of CAPCs corresponding to a plurality of QoS flows based on an actual service requirement, a target CAPC that meets the actual service requirement, and determine the target CAPC as the CAPC of the SL DRB, to ensure that the SL DRB can meet an actual service transmission requirement.

In a possible implementation, the method further includes: determining, as the CAPC of the SL DRB, a CAPC corresponding to a quality of service flow whose characteristic parameter meets a second preset condition in the one or more quality of service flows associated with the SL DRB configuration, where the characteristic parameter indicates a quality of service characteristic of the quality of service flow; determining, as the CAPC of the SL DRB, a largest CAPC value, a smallest CAPC value, or a CAPC average value in the one or more CAPCs corresponding to the one or more quality of service flows associated with the SL DRB configuration; or determining, as the CAPC of the SL DRB, a CAPC that corresponds to a largest quantity of quality of service flows and that is in the one or more CAPCs corresponding to the one or more quality of service flows associated with the SL DRB configuration.

In this embodiment of this application, the UE may determine, according to a specific rule from a plurality of CAPCs corresponding to a plurality of QoS flows, a target CAPC that meets a rule requirement, and determine the target CAPC as the CAPC of the SL DRB, to ensure accuracy of the CAPC corresponding to the SL DRB.

In a possible implementation, the target CAPC includes any one or more of the following CAPCs: a CAPC of a quality of service flow having a smallest or largest packet delay budget in the one or more quality of service flows associated with the first SL DRB configuration; a CAPC of a quality of service flow having a lowest or highest default priority level in the one or more quality of service flows associated with the first SL DRB configuration; a CAPC of a quality of service flow having a lowest or highest priority level in the one or more quality of service flows associated with the first SL DRB configuration; a CAPC of a quality of service flow having a smallest or largest packet error rate in the one or more quality of service flows associated with the first SL DRB configuration; a largest CAPC value, a smallest CAPC value, or a CAPC average value in the one or more CAPCs corresponding to the one or more quality of service flows associated with the first SL DRB configuration; or a CAPC that corresponds to a largest quantity of quality of service flows and that is in the one or more CAPCs corresponding to the one or more quality of service flows associated with the first SL DRB configuration.

In this embodiment of this application, the UE may determine, according to a specific rule from a plurality of CAPCs corresponding to a plurality of QoS flows, a target CAPC that meets a rule requirement, and determine the target CAPC as the CAPC of the SL DRB, to ensure accuracy of the CAPC corresponding to the SL DRB.

In a possible implementation, the characteristic parameter includes one or more of a packet delay budget, a default priority level, a priority level, and a packet error rate. The second preset condition includes any one of the following conditions: The packet delay budget is a smallest value or a largest value in one or more packet delay budgets corresponding to the one or more quality of service flows associated with the SL DRB configuration; the default priority level is a smallest value or a largest value in one or more default priority levels corresponding to the one or more quality of service flows associated with the SL DRB configuration; the priority levels is a smallest value or a largest value in one or more priority levels corresponding to the one or more quality of service flows associated with the SL DRB configuration; or the packet error rate is a smallest value or a largest value in one or more packet error rates corresponding to the one or more quality of service flows associated with the SL DRB configuration.

In this embodiment of this application, the UE may determine, according to a specific rule from a plurality of CAPCs corresponding to a plurality of QoS flows, a target CAPC that meets a rule requirement, and determine the target CAPC as the CAPC of the SL DRB, to ensure accuracy of the CAPC corresponding to the SL DRB.

In a possible implementation, the method further includes: determining a quantity of the at least two SL DRBs based on a quantity of different CAPCs corresponding to the one or more quality of service flows associated with the first SL DRB configuration, and establishing the at least two SL DRBs, where CAPCs of the at least two SL DRBs respectively correspond to the CAPCs of the one or more quality of service flows.

In this embodiment of this application, the UE may determine the quantity of SL DRBs based on the quantity of different CAPCs corresponding to the QoS flows, and establish the SL DRBs based on the quantity. A CAPC of each SL DRB corresponds to a CAPC of the QoS flow. This ensures fair transmission of each QoS flow and reduces link bearer resources.

In a possible implementation, the method further includes: determining that the first SL DRB configuration meets a first preset condition, where the first preset condition includes one or more of the following conditions: The first SL DRB configuration is a default default SL DRB configuration; the first SL DRB configuration is obtained by using a system information block SIB or a preconfiguration message; the first SL DRB configuration does not provide a corresponding CAPC configuration; or a CAPC configuration provided by the first SL DRB configuration is inappropriate.

In this embodiment of this application, before determining the CAPC of the SL DRB, the UE may first determine whether the SL DRB configuration meets a specific condition (namely, the first preset condition), and after determining that the SL DRB configuration meets the condition, the UE may determine the CAPC of the SL DRB. This avoids a resource waste caused by the UE unconditionally determining the CAPC of the SL DRB.

In a possible implementation, that a CAPC configuration provided by the first SL DRB configuration is inappropriate includes one or more of the following: A plurality of quality of service flows associated with the first SL DRB configuration correspond to different CAPCs; a maximum difference between CAPCs corresponding to a plurality of quality of service flows associated with the first SL DRB configuration is greater than or equal to a first threshold; a quantity of a plurality of quality of service flows associated with the first SL DRB configuration is greater than or equal to a second threshold; or a smallest value in CAPCs corresponding to a plurality of quality of service flows associated with the first SL DRB configuration is greater than a value of a CAPC provided by the first SL DRB configuration.

In this embodiment of this application, the UE may determine, based on a specific condition, whether the CAPC configuration provided by the SL DRB configuration is appropriate. For example, when a quantity of QoS flows associated with the SL DRB configuration exceeds a specific quantity (namely, the second threshold), it may be directly considered that the CAPC configuration provided by the SL DRB configuration is inappropriate, and the UE may further determine the CAPC of the SL DRB based on the QoS flows, to ensure quality of SL-U communication and fairness of transmission for different service requirements.

In a possible implementation, the method further includes: when the first SL DRB configuration does not provide the corresponding CAPC configuration or the CAPC configuration provided by the first SL DRB configuration is inappropriate, sending an indication message to an access network device, where the indication message indicates that the first SL DRB configuration does not provide the corresponding CAPC configuration or the CAPC configuration provided by the first SL DRB configuration is inappropriate; and receiving a second SL DRB configuration sent by the access network device, where the second SL DRB configuration is different from the first SL DRB configuration; or when the first SL DRB configuration does not provide the corresponding CAPC configuration or the CAPC configuration provided by the first SL DRB configuration is inappropriate, if the terminal device is in a radio resource control RRC idle mode or an RRC inactive mode, entering an RRC connected mode; and receiving a second SL DRB configuration sent by an access network device, where the second SL DRB configuration is different from the first SL DRB configuration.

In this embodiment of this application, when determining that the SL DRB configuration does not provide the corresponding CAPC configuration or the CAPC configuration provided by the SL DRB configuration is inappropriate, the UE may send the indication message to the access network device or trigger a process of entering the RRC connected mode, and then receive a new SL DRB configuration (namely, a second SL DRB configuration) sent by the access network device, so that the UE can perform transmission of a QoS flow by using an SL DRB with an appropriate CAPC, to ensure quality of SL-U communication and fairness of transmission for different service requirements.

In a possible implementation, the one or more quality of service flows associated with the first SL DRB configuration include a quality of service flow corresponding to a non-standardized PC5 quality of service identifier, and the method further includes: determining, based on a characteristic parameter of the quality of service flow corresponding to the non-standardized PC5 quality of service identifier, a CAPC of the quality of service flow corresponding to the non-standardized PC5 quality of service identifier, where the characteristic parameter indicates a quality of service characteristic of the quality of service flow corresponding to the non-standardized PC5 quality of service identifier, and the characteristic parameter includes one or more of a packet delay budget, a default priority level, a priority level, and a packet error rate.

In this embodiment of this application, if there is a non-standardized QoS flow in the QoS flows associated with the SL DRB configuration, the UE may determine a CAPC of the non-standardized quality of service flow based on a characteristic parameter of the non-standardized QoS flow, and may determine, according to a specific rule, whether to determine the CAPC of the non-standardized quality of service flow as the CAPC of the SL DRB, to ensure fairness of transmission of the non-standardized QoS flow.

In a possible implementation, the method further includes: obtaining a plurality of default SL DRB configurations, where each of the plurality of default SL DRB configurations is associated with a different CAPC configuration; and establishing a plurality of default SL DRBs based on the plurality of default SL DRB configurations.

In this embodiment of this application, the UE may independently determine the CAPC of the SL DRB, to ensure quality of SL-U communication and fairness of transmission for different service requirements. In addition, the UE may further obtain a plurality of default SL DRB configurations having different CAPC configurations, and respectively establish default SL DRBs based on the default SL DRB configurations, in other words, the default SL DRBs have different CAPCs, so that it is ensured that transmission can be performed, by using a default SL DRB having an appropriate CAPC, on a QoS flow subsequently mapped to the default SL DRB, to further ensure the quality of SL-U communication and the fairness of transmission for different service requirements.

In a possible implementation, the method further includes: when no mapping rule of a corresponding SL DRB is configured for or stored in a to-be-transmitted quality of service flow, mapping the to-be-transmitted quality of service flow to a target default SL DRB in the plurality of default SL DRBs, where a CAPC of the target default SL DRB is the same as a CAPC of the to-be-transmitted quality of service flow.

In this embodiment of this application, when a QoS flow needs to be mapped to a default SL DRB, in other words, when no mapping rule of the corresponding SL DRB is configured for or stored in the QoS flow, the UE may map, based on a CAPC of the QoS flow, the QoS flow to a default SL DRB (namely, the target default SL DRB) whose CAPC is the same as the CAPC of the QoS flow for transmission, to ensure quality of SL-U communication and fairness of transmission for different service requirements.

In a possible implementation, the method further includes: when no mapping rule of a corresponding SL DRB is configured for or stored in a to-be-transmitted quality of service flow, mapping the to-be-transmitted quality of service flow to a default SL DRB whose CAPC is the same as a CAPC of the to-be-transmitted quality of service flow in the plurality of default SL DRBs.

In this embodiment of this application, when a QoS flow needs to be mapped to a default SL DRB, in other words, when no mapping rule of the corresponding SL DRB is configured for or stored in the QoS flow, the UE may map, based on a CAPC of the QoS flow, the QoS flow to a default SL DRB whose CAPC is the same as the CAPC of the QoS flow for transmission, to ensure quality of SL-U communication and fairness of transmission for different service requirements.

According to a second aspect, an embodiment of this application provides a communication method, applied to an access network device. The method may include: receiving an indication message sent by a terminal device, and/or sending a second SL DRB configuration to the terminal device.

In a possible implementation, the method further includes: sending a plurality of default SL DRB configurations, where each of the plurality of default SL DRB configurations is associated with a different CAPC configuration.

According to a third aspect, an embodiment of this application provides a communication method, applied to a terminal device. The method may include: obtaining a plurality of default SL DRB configurations, where each of the plurality of default SL DRB configurations is associated with a different CAPC configuration; and establishing a plurality of default SL DRBs based on the plurality of default SL DRB configurations.

In this embodiment of this application, the UE may obtain a plurality of default SL DRB configurations having different CAPC configurations, and respectively establish default SL DRBs based on the default SL DRB configurations, in other words, the default SL DRBs have different CAPCs, so that it is ensured that transmission can be performed, by using a default SL DRB having an appropriate CAPC, on a QoS flow subsequently mapped to the default SL DRB.

In a possible implementation, the method further includes: when no mapping rule of a corresponding SL DRB is configured for or stored in a to-be-transmitted quality of service flow, mapping the to-be-transmitted quality of service flow to a target default SL DRB in the plurality of default SL DRBs, where a CAPC of the target default SL DRB is the same as a CAPC of the to-be-transmitted quality of service flow.

In a possible implementation, the method further includes: when no mapping rule of a corresponding SL DRB is configured for or stored in a to-be-transmitted quality of service flow, mapping the to-be-transmitted quality of service flow to a default SL DRB whose CAPC is the same as a CAPC of the to-be-transmitted quality of service flow in the plurality of default SL DRBs.

According to a fourth aspect, an embodiment of this application provides a communication method, applied to an access network device. The method may include: sending a plurality of default SL DRB configurations, where each of the plurality of default SL DRB configurations is associated with a different CAPC configuration.

According to a fifth aspect, an embodiment of this application provides a communication apparatus. The communication apparatus includes a processor, and the processor is configured to support the communication apparatus in implementing a corresponding function in the communication method provided in any one of the first aspect, the second aspect, the third aspect, or the fourth aspect. The communication apparatus may further include a memory. The memory is configured to be coupled to the processor, and stores program instructions and data that are necessary for the communication apparatus. The communication apparatus may further include an interface circuit for communication between the communication apparatus and another device or a communication network.

According to a sixth aspect, an embodiment of this application provides a computer-readable storage medium, configured to store computer software instructions used by the communication apparatus that is configured to implement a communication method and that is provided in one or more of implementations of the fifth aspect, and the computer-readable storage medium includes a program designed for performing the foregoing aspects.

According to a seventh aspect, an embodiment of this application provides a computer program. The computer program includes instructions, and when the computer program is executed by a computer, the computer is enabled to perform a process performed by the communication apparatus that is configured to implement a communication method and that is provided in one or more of implementations of the fifth aspect.

According to an eighth aspect, an embodiment of this application provides a chip system. The chip system includes a processor, configured to support a device in implementing a function in any one of the first aspect, the second aspect, the third aspect, or the fourth aspect, for example, generating or processing information in the foregoing communication method. In a possible design, the chip system further includes a memory, and the memory is configured to store program instructions and data that are necessary for the device. The chip system may include a chip, or may include a chip and another discrete component.

### BRIEF DESCRIPTION OF DRAWINGS

To describe the technical solutions in embodiments of this application or in the background more clearly, the following describes the accompanying drawings for describing embodiments of this application or the background.
FIG. 1 is a diagram of an architecture of a communication system according to an embodiment of this application;
FIG. 2 is a diagram of a sidelink UE-to-network relay scenario according to an embodiment of this application;
FIG. 3 is a diagram of a sidelink UE-to-UE relay scenario according to an embodiment of this application;
FIG. 4 is a schematic flowchart of performing uplink transmission based on an unlicensed spectrum according to an embodiment of this application;
FIG. 5 is a schematic flowchart of a communication method according to an embodiment of this application;
FIG. 6 is a schematic flowchart of another communication method according to an embodiment of this application;
FIG. 7 is a diagram of a structure of a communication apparatus according to an embodiment of this application; and
FIG. 8 is a diagram of another structure of a communication apparatus according to an embodiment of this application.

### DESCRIPTION OF EMBODIMENTS

The following describes embodiments of this application with reference to the accompanying drawings in embodiments of this application.

In this application, "one or more of the following items (pieces)" or a similar expression thereof means any combination of these items, including a single item (piece) or any combination of a plurality of items (pieces). For example, one or more of the following items (pieces): a, b, or c, may indicate a, b, c, a and b, a and c, b and c, or a, b, and c. a, b, and c each may be singular or plural. "At least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects.

In the specification, claims, and accompanying drawings of this application, the terms "first", "second", "third", "fourth" and so on are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in this specification means that a particular characteristic, structure, or feature described with reference to embodiments may be included in one or more embodiments of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

In this application, the term "example" or "for example" is used to represent giving an example, an illustration, or a description. Any embodiment or design scheme described as "example", "such as" or "for example" in this application should not be explained as being more preferred or having more advantages than another embodiment or design scheme. Exactly, use of the term "example", "such as", "for example", or the like is intended to present a related concept in a specific manner.

It should be understood that, in this application, "when" and "if" mean that an apparatus performs corresponding processing in an objective situation, and are not intended to limit time. The terms do not mean that the apparatus is required to have a determining action during implementation, and do not mean any other limitation.

"Simultaneously" in this application may be understood as being at a same time point, may be understood as being in a period of time, or may be understood as being in a same periodicity, and may be specifically understood with reference to a context.

In this application, an element represented in a singular form is intended to represent "one or more", but does not represent "one and only one", unless otherwise specified.

In addition, terms "system" and "network" in this specification may be used interchangeably.

It should be understood that in embodiments of this application, "B corresponding to A" indicates that B is associated with A, and B may be determined based on A. However, it should be further understood that determining B based on A does not mean that B is determined based only on A. B may alternatively be determined based on A and/or other information.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as an internet interacting with other systems by using the signal).

The technical solutions in embodiments of this application may be applied to a sidelink communication system, or may be applied to another communication system operating in an unlicensed spectrum (unlicensed band), for example, a long term evolution (long term evolution, LTE) system, a next generation radio access technology (new radio access NR technology) communication system, or a next generation wireless local area network (wireless local area network, WLAN) system, or certainly may be a future communication system operating in an unlicensed spectrum, for example, a 6^{th} generation (6^{th} generation, 6G) system or even a 7^{th} generation (7^{th} generation, 7G) system. It may be understood that "the communication system operating in the unlicensed spectrum" mentioned in this application means that the communication system operates in the unlicensed spectrum in some cases, and it is clear that the communication system may alternatively operate in a licensed spectrum in some other cases.

It should be understood that a network architecture and a service scenario described in embodiments of this application are intended to describe the technical solutions in embodiments of this application more clearly, and do not constitute a limitation on the technical solutions provided in embodiments of this application. Persons of ordinary skill in the art may learn that with evolution of the communication network architecture and emergence of a new service scenario, the technical solutions provided in embodiments of this application are also applicable to similar technical problems.

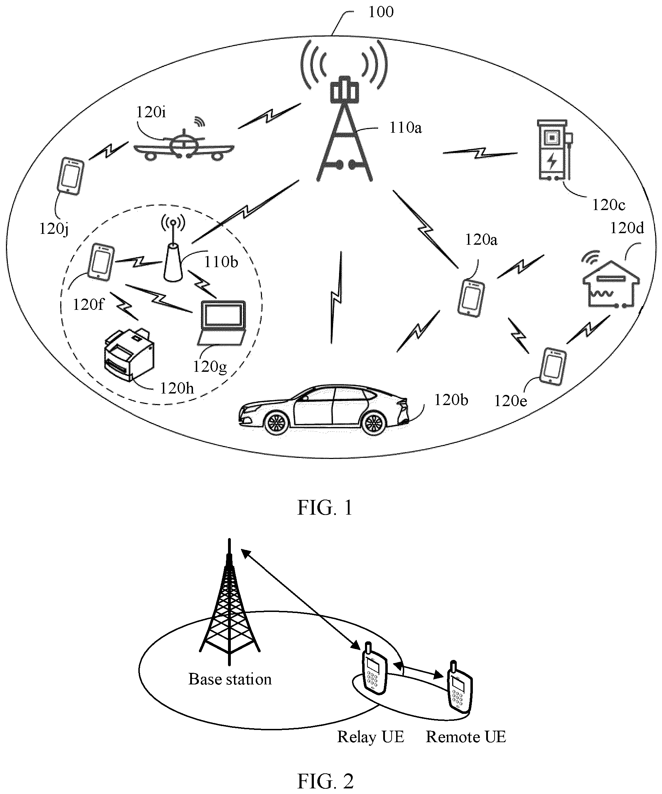

FIG. 1 is a diagram of an architecture of a communication system according to an embodiment of this application. As shown in FIG. 1, the communication system includes a radio access network 100. The radio access network 100 may include at least one radio access network device (for example, 110a and 110b in FIG. 1), and may further include at least one terminal device (for example, 120a to 120j in FIG. 1). The terminal device may be connected to the radio access network device in a wireless manner. Terminal devices may be connected to each other in a wired or wireless manner, and radio access network devices may be connected to each other in a wired or wireless manner. It may be understood that FIG. 1 is merely a diagram. The communication system may further include another network device, for example, may further include a core network device, a wireless relay device, and a wireless backhaul device, which are not shown in FIG. 1.

The radio access network device may be referred to as a network device for short, and is an access device that is used by the terminal to wirelessly access the communication system. The radio access network device may be a base station (base station), an evolved NodeB (evolved NodeB, eNodeB), a transmission reception point (transmission reception point, TRP), a next generation base station (next generation NodeB, gNB) in a 5^{th} generation (5^{th} generation, 5G) mobile communication system, a next generation base station in a 6^{th} generation (6^{th} generation, 6G) mobile communication system, a base station in a future mobile communication system, an access node in a Wi-Fi system, or the like. Alternatively, the radio access network device may be a module or a unit that completes some functions of a base station, for example, may be a central unit (central unit, CU) or a distributed unit (distributed unit, DU). The CU herein completes functions of a radio resource control protocol and a packet data convergence protocol (packet data convergence protocol, PDCP) of the base station, and may further complete functions of a service data adaptation protocol (service data adaptation protocol, SDAP). The DU completes functions of a radio link control layer and a medium access control (medium access control, MAC) layer of the base station, and may further complete functions of some or all physical layers. For specific descriptions of the foregoing protocol layers, refer to related technical specifications in the 3^{rd} generation partnership project (3^{rd} generation partnership project, 3GPP). The radio access network device may be a macro base station (like 110a in FIG. 1), or may be a micro base station or an indoor base station (like 110b in FIG. 1), or may be a relay node or a donor node. A specific technology and a specific device form that are used by the radio access network device are not limited in embodiments of this application. For ease of description, the following uses an example in which the base station is used as the radio access network device for description.

The terminal device is a device having a wireless transceiver function, and may send a signal to the base station, or receive a signal from the base station. The terminal device may also be referred to as a terminal, a user equipment (user equipment, UE), a mobile station, a mobile terminal, or the like. The terminal device may be widely used in various scenarios, for example, device-to-device (device-to-device, D2D), vehicle to everything (vehicle to everything, V2X) communication, machine type communication (machine type communication, MTC), internet of things (internet of things, IoT), virtual reality, augmented reality, industrial control, self-driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or movable. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 through 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, 110a and 110b in FIG. 1 may be referred to as communication apparatuses having a base station function, and 120a to 120j in FIG. 1 may be referred to as communication apparatuses having a terminal function.

Communication between the base station and the terminal, between base stations, or between terminals may be performed by using a licensed spectrum, or may be performed by using an unlicensed spectrum, or may be performed by using both the licensed spectrum and the unlicensed spectrum. Communication may be performed by using a spectrum below 6 gigahertz (gigahertz, GHz), may be performed by using a spectrum above 6 GHz, or may be performed by using both the spectrum below 6 GHz and the spectrum above 6 GHz.

This application mainly focuses on a case in which communication between the terminals is performed by using the unlicensed spectrum. It may be understood that an interface between the terminals is a PC5 interface, and an interface between the terminal and the base station is a Uu interface. The terminal may perform sidelink communication with another terminal by using the unlicensed spectrum, and the communication between the terminal and the terminal device may be unicast communication, multicast communication, or broadcast communication. In the sidelink communication, one or more antennas may be configured for the terminal, to receive and send a message/information/data, and the like. It may be understood that the terminal may further include a plurality of components (for example, a processor, a modulator, a multiplexer, a demodulator, or a demultiplexer) related to message/information/data sending and receiving.

In this embodiment of this application, an apparatus configured to implement a function of the terminal may be the terminal, or may be an apparatus that can support the terminal in implementing the function, for example, a chip system, a communication module, or a modem. The apparatus may be installed in the terminal. In this embodiment of this application, the chip system may include a chip, or may include a chip and another discrete component. In the technical solutions provided in embodiments of this application, the technical solutions provided in embodiments of this application are described by using an example in which the apparatus for implementing a terminal function is a terminal and the terminal is a UE. A specific technology and a specific device form that are used by the terminal device are not limited in embodiments of this application.

In some scenarios, the UE may alternatively be configured to serve as the base station. For example, the UE may serve as a scheduling entity that provides a sidelink signal between UEs in vehicle to everything (vehicle to everything, V2X), device-to-device (device-to-device, D2D), peer-to-peer (peer-to-peer, P2P), or the like.

In some scenarios, the UE may alternatively be configured to serve as a relay node. For example, the UE may serve as a relay device (a relay) or an integrated access and backhaul (integrated access and backhaul, IAB) node, and is configured to provide a wireless backhaul service for the terminal device.

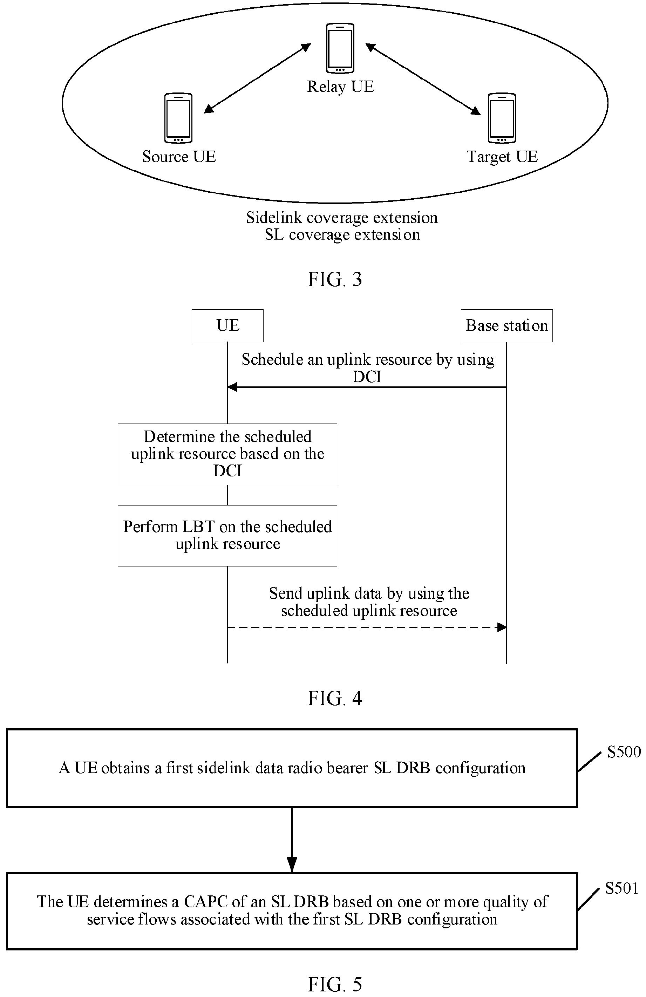

Optionally, a typical application scenario of the sidelink communication is the vehicle to everything (V2X). A method provided in this application may be applied to the V2X scenario (for example, the foregoing scenario of communication between 120a and 120b in FIG. 1), and may be applied to a sidelink UE-to-network relay (Sidelink UE-to-Network Relay) scenario and a sidelink UE-to-UE relay (Sidelink UE-to-UE Relay) scenario. FIG. 2 is a diagram of a sidelink UE-to-network relay scenario according to an embodiment of this application. As shown in FIG. 2, the sidelink UE-to-network relay scenario includes a remote UE (remote UE) and a relay UE (relay UE), and further includes a base station. A method provided in this application may be applied to communication between the remote UE and the relay UE. FIG. 3 is a diagram of a sidelink UE-to-UE relay scenario according to an embodiment of this application. As shown in FIG. 3, the sidelink UE-to-UE relay scenario includes a source UE (source UE), a relay UE (relay UE), and a target UE (target UE). A method provided in this application may be applied to communication between the source UE and the relay UE and/or communication between the relay UE and the target UE.

In embodiments of this application, the term "wireless communication" may be referred to as "communication" for short, and the term "communication" may alternatively be described as "data transmission", "information transmission", or "transmission".

The following explains and describes some terms related to this application, to facilitate understanding of a person skilled in the art.

### (1) Manners in which a UE obtains a sidelink resource

There are two manners in which the UE obtains the sidelink resource. One of the manners is a base station scheduling mode (also referred to as a mode 1), and the other manner is an autonomous contention mode (also referred to as a mode 2). When operating in the mode 1, the UE obtains the SL resource from a base station. Specifically, the base station may schedule the SL resource for the UE by using downlink control information (downlink control information, DCI), or configure an SL configured grant (configured grant) for the UE by using a radio resource control (radio resource control, RRC) message. When operating in the mode 2, the UE may receive an SL resource pool configuration from a base station, or obtain the SL resource pool configuration from a preconfiguration, and then select an SL resource from an SL resource pool for sending. Specifically, the SL resource may be selected randomly, or may be selected based on a result of sensing (sensing) or partial sensing (partial sensing).

### (2) Listen-before-talk (listen-before-talk, LBT) channel contention access mechanism

To fairly use an unlicensed spectrum, a terminal and a network device need to perform an LBT process (a channel access process) before sending data. Usually, LBT is performed at a granularity of a channel (for example, a 20 MHz channel). Before sending a signal (for example, a data signal) on a channel, a device may first detect whether the channel is idle, for example, detect whether a nearby device is occupying the channel to send a signal. This detection process may be referred to as clear channel assessment (clear channel assessment, CCA), or may be referred to as the channel access process. There are two types of channel access processes: a first-type channel access process and a second-type channel access process.

The first-type (type 1) channel access process (which may also be referred to as a fixed duration-based channel access process) may be fixed duration-based energy detection. For a specific bandwidth, for example, 20 MHz, if energy of a signal received by a device (where the device may be a terminal device or a network device) in fixed duration is less than or equal to a first preset threshold, it is considered that the channel is idle (idle), and the device can perform data transmission by using the idle channel. If energy of a signal received in fixed duration is greater than a first preset threshold, it is considered that the channel is busy (busy), and the device does not perform data transmission by using the busy channel.

The second-type (type 2) channel access process (which may also be referred to as a fallbackbased channel access process) may be fallback mechanism-based energy detection. For a specific bandwidth, a window is defined, and the window defines a range of a quantity of detected slots. A device randomly selects a value A from the window (or a value range). After the device detects at least A idle slots, it is considered that the channel is idle, and the device can perform data transmission by using the idle channel. If there is no idle slot or a quantity of idle slots is less than A, it is considered that the channel is busy, and the device does not perform data transmission by using the busy channel. The idle slot means that energy of a signal received in one slot is less than or equal to a second preset threshold. The first preset threshold and the second preset threshold may be predefined, for example, predefined in a protocol. In addition, values of the first preset threshold and the second preset threshold may be the same or different.

The type 1 is used as an example. When performing type 1 (fixed duration-based energy detection) LBT (that is, the first-type channel access process), the device needs to determine a contention window size (Contention Window size, CW size) and channel occupancy time (channel occupancy time, COT) based on a channel access priority class (channel access priority class, CAPC). A relationship between the CAPC and the COT is shown in the following Table 1. A 1^{st} column in Table 1 indicates a value of the CAPC, and a smaller value of the CAPC indicates a higher priority level corresponding to the CAPC. A 5^{th} column in Table 1 indicates COT magnitudes (unit: millisecond ms) corresponding to different values of the CAPC. It may be understood that, for meanings of other columns in Table 1, refer to an existing standard, for example, the 3^{rd} generation partnership project (3^{rd} generation partnership project, 3GPP) technical specification (technical specification, TS) 37.213 V17.2.0, or refer to a technical specification of another version. Details are not described herein.

**Table 1**

| Channel access priority class (*p*) | m*ₚ* | CW_{min,*p*} | CW_{max,*p*} | T_{m cot,*p*} | Allowed CW*ₚ* sizes |
|---|---|---|---|---|---|
| 1 | 1 | 3 | 7 | 2 ms | {3, 7} |
| 2 | 1 | 7 | 15 | 3 ms | {7, 15} |
| 3 | 3 | 15 | 63 | 8 or 10 ms | {15, 31, 63} |
| 4 | 7 | 15 | 1023 | 8 or 10 ms | {15, 31, 63, 127, 255, 511, 1023} |

Two results may be obtained by performing the channel access process: The channel access process is completed (where this is also referred to as an LBT success) and the channel access process is not completed (where this is also referred to as an LBT failure). For example, there are a plurality of time domain start positions in a time-frequency resource that can be used for data transmission. If it is determined that the channel is idle before any time domain start position, it may be considered that the channel access process is completed. If it is determined that the channel is busy before all the time domain start positions, it may be considered that the channel access process is not completed.

### (3) Unlicensed spectrum-based Uu communication

Uu communication herein is communication performed between a UE and a base station through an air interface. When both the base station and the UE operate in a licensed spectrum, after the base station schedules an uplink resource for the UE, the UE may perform uplink transmission by directly using the uplink resource. However, when both the base station and the UE operate in an unlicensed spectrum, refer to FIG. 4. FIG. 4 is a schematic flowchart of performing uplink transmission based on an unlicensed spectrum according to an embodiment of this application. After the base station schedules an uplink resource for the UE, the UE may still need to perform LBT on the uplink resource, and can perform uplink transmission by using the uplink resource only after the LBT succeeds. In other words, if LBT is performed on the scheduled uplink resource, and the LBT fails, the scheduled uplink resource cannot be used.

For unlicensed spectrum communication (NR-U) on a Uu interface, the base station may configure a corresponding CAPC for each data radio bearer (Data Radio Bearer, DRB). Specifically, a logical channel (Logical Channel, LCH) configuration associated with the DRB may include a CAPC configuration. When the base station configures the CAPC of the DRB, the base station needs to consider 5G quality of service identifiers (5G QoS Identifiers, 5QIs) corresponding to all quality of service (Quality of Service, QoS) flows (flows) mapped to the DRB, and also needs to consider fairness between different service types and transmission. A mapping table between a standardized 5QI and a CAPC is defined in a standard (in other words, a CAPC used by a QoS flow corresponding to the standardized 5QI is defined). As shown in Table 2, a lower CAPC value indicates a higher priority level, a value in a 2^{nd} column indicates an index value corresponding to the standardized 5QI, and a 5QI corresponding to a CAPC of 4 is not clearly defined currently. In addition, it is specified that for a QoS flow corresponding to a non-standardized 5QI (non-standardized 5QI), a CAPC of a standardized 5QI corresponding to a QoS flow whose QoS characteristics (QoS characteristics) best match those of the QoS flow is used as a CAPC of the QoS flow.

**Table 2**

| CAPC | 5QI |
|---|---|
| 1 | 1, 3, 5, 65, 66, 67, 69, 70, 79, 80, 82, 83, 84, and 85 |
| 2 | 2, 7, and 71 |
| 3 | 4, 6, 8, 9, 72, 73, 74, and 76 |
| 4 | - |

The 5QI is used for representing a group of QoS characteristics, where the QoS characteristics may include one or more of a resource type (resource type), a default priority level (default priority level), a priority level (priority level), a packet delay budget (packet delay budget, PDB), a packet error rate (packet error rate, PER), a default maximum data burst volume (Default Maximum Data Burst Volume, DMDV), and a default averaging window (Default Averaging Window).

### (4) QoS flow for SL communication

For SL communication, the QoS flow may also support two manners: a standardized PC5 quality of service identifier (standardized PC5 QoS Identifier, standardized PQI) and a non-standardized PQI (non-standardized PQI). There is also a mapping table between the standardized PQI and a CAPC. For details, refer to a mapping relationship between the 5QI and the CAPC in Table 2. Details are not described herein.

For the standardized PQI, each PQI corresponds to a group of QoS characteristics, including one or more of a resource type (resource type), a default priority level (default priority level), a packet delay budget (packet delay budget, PDB), a packet error rate (packet error rate, PER), a default maximum data burst volume (Default Maximum Data Burst Volume, DMDV), and a default averaging window (Default Averaging Window). In addition, the standardized PQI may be used together with a priority level indicated by an upper layer. The priority level may be used for overriding (overriding) the default priority level corresponding to the standardized PQI.

For the non-standardized PQI, a V2X layer may provide a set of specific non-standardized QoS characteristics for an access stratum (Access Stratum, AS).

For a mapping relationship between the standardized PQI and the QoS characteristics, refer to the following Table 3 and Table 4. Table 3 and Table 4 are respectively tables that are of the mapping relationship between the standardized PQI and the QoS characteristics and that are defined for V2X and ProSe.

**Table 3**

| PQI value | Resource type | Default priority level | Packet delay budget | Packet error rate | Default maximum data burst volume | Default averaging window | Example services |
|---|---|---|---|---|---|---|---|
| 24 | GBR (NOTE 1) | 1 | 150 ms | 10⁻² | N/A | 2000 ms | Mission critical user plane push to talk voice (e.g. MCPTT) |
| 25 | | 2 | 200 ms | 10⁻² | N/A | 2000 ms | Non-mission-critical user plane push to talk voice |
| 26 | | 2 | 200 ms | 10⁻³ | N/A | 2000 ms | Mission critical video user plane |
| 60 | Non-GBR | 1 | 120 ms | 10⁻⁶ | N/A | N/A | Mission critical delay sensitive signaling (e.g. MC-PTT signaling) |
| 61 | | 6 | 400 ms | 10⁻⁶ | N/A | N/A | Mission critical data (e.g. example services are the same as 5QI 6/8/9 as specified in TS 23.501 [4]) |
| 92 | Delay critical GBR (NOTE 1) | 5 | 5 ms | 10⁻⁴ | 20000 bytes | 2000 ms | Interactive service - consume VR content with high compression rate via tethered VR headset (see TS 22.261 [6]) |
| 93 | | 6 | 10 ms | 10⁻⁴ | 20000 bytes | 2000 ms | Interactive service - consume VR content with low compression rate via tethered VR headset; gaming or interactive data exchanging (see TS 22.261 [6]) |
| NOTE 1: GBR and delay critical GBR PQIs can only be used for unicast PC5 communication. | | | | | | | |

**Table 4**

| PQI value | Resource type | Default priority level | Packet delay budget | Packet error rate | Default maximum data burst volume | Default averaging window | Example services |
|---|---|---|---|---|---|---|---|
| 21 | GBR (NOTE 1) | 3 | 20 ms | 10⁻⁴ | N/A | 2000 ms | Platooning between UEs - higher degree of automation; platooning between UE and RSU - higher degree of automation |
| 22 | | 4 | 50 ms | 10⁻² | N/A | 2000 ms | Sensor sharing - higher degree of automation |
| 23 | | 3 | 100 ms | 10⁻⁴ | N/A | 2000 ms | Information sharing for automated driving - between UEs or UE and RSU - higher degree of automation |
| 55 | Non-GBR | 3 | 10 ms | 10⁻⁴ | N/A | N/A | Cooperative lane change - higher degree of automation |
| 56 | | 6 | 20 ms | 10⁻¹ | N/A | N/A | Platooning informative exchange - low degree of automation; platooning - information sharing with RSU |
| 57 | | 5 | 25 ms | 10⁻¹ | N/A | N/A | Cooperative lane change - lower degree of automation |
| 58 | | 4 | 100 ms | 10⁻² | N/A | N/A | Sensor information sharing - lower degree of automation |
| 59 | | 6 | 500 ms | 10⁻¹ | N/A | N/A | Platooning - reporting to an RSU |
| 90 | Delay critical GBR (NOTE 1) | 3 | 10 ms | 10⁻⁴ | 2000 bytes | 2000 ms | Cooperative collision avoidance; sensor sharing - higher degree of automation; video sharing - higher degree of automation |
| 91 | | 2 | 3 ms | 10⁻⁵ | 2000 bytes | 2000 ms | Emergency traj ectory alignment; sensor sharing - higher degree of automation |
| NOTE 1: GBR and delay critical GBR PQIs can only be used for unicast PC5 communication. | | | | | | | |

First, a technical problem to be specifically resolved in this application is analyzed and proposed. A UE may obtain an SL DRB configuration by using RRC dedicated signaling, a system information block (System Information Block, SIB) message, a preconfiguration message, or the like. Specifically, there may be the following several different cases:
(1) When the UE is in an RRC connected mode, the UE reports a QoS parameter by using an SUI (Sidelink UE information) message, and a base station configures the SL DRB configuration and a mapping relationship between a QoS flow and an SL DRB by using the RRC dedicated signaling.
(2) When the UE is in an RRC idle mode/RRC inactive mode, a base station configures the SL DRB configuration and a mapping relationship between a QoS flow and an SL DRB by using the SIB message.
(3) When the UE is in an out of coverage (Out of coverage, OOC) mode, the UE uses the SL DRB configuration and a mapping relationship between a QoS flow and an SL DRB in the preconfiguration message.

In addition, a default (default) SL DRB configuration may also be supported. Specifically, when the UE cannot find a corresponding QoS flow in a stored explicit mapping relationship between the QoS flow and the SL DRB, the QoS flow is mapped to a default SL DRB for transmission. The explicit mapping relationship between the QoS flow and the SL DRB may be represented by indicating a mapping relationship between a QoS flow identifier and the SL DRB, or may be represented by indicating a mapping relationship between a QoS parameter (for example, a QoS file or a QoS profile (profile)) corresponding to the QoS flow and the SL DRB. The mapping relationship between the QoS flow and the SL DRB may be that a plurality of QoS flows are mapped to one SL DRB. In other words, one SL DRB may carry data transmission of a plurality of QoS flows.

This solution has the following disadvantages:
Performance and fairness of entire SL-U communication are affected. Specifically, when a plurality of QoS flows are mapped to one SL DRB for transmission, QoS characteristics of these QoS flows may differ greatly (for example, PDBs (packet delay budgets) of different QoS flows differ greatly). Especially for a case in which the UE is in the RRC idle mode/the RRC inactive mode/the OOC mode, considering signaling overheads and a case in which the QoS flows may also correspond to non-standardized PQIs, a network cannot explicitly map all the QoS flows corresponding to the non-standardized PQIs to a non-default SL DRB for transmission. In other words, many QoS flows corresponding to non-standardized PQIs are finally mapped to the default SL DRB for transmission, and QoS characteristics of these QoS flows corresponding to the non-standardized PQIs may differ greatly. This means that CAPCs corresponding to these QoS flows may also differ greatly. Therefore, for an SL DRB used for transmission of these QoS flows, a CAPC of the SL DRB may not be configured or is configured but is actually inappropriate. This affects performance and fairness of entire SL-U communication. For example, if the CAPC of the SL DRB is not configured, transmission of these QoS flows may not be performed, or transmission may be performed based on an inappropriate CAPC.

To resolve a problem of performance and fairness of entire SL-U communication, the foregoing existing disadvantages are comprehensively considered, and technical problems to be actually resolved in this application include the following:
A CAPC corresponding to an SL DRB is properly configured or properly determined, to ensure the performance and the fairness of entire SL-U communication. In embodiments of this application, after obtaining an SL DRB configuration, a terminal device may determine, based on one or more QoS flows associated with the SL DRB configuration, a CAPC of an SL DRB established based on the SL DRB configuration. There may be one or more established SL DRBs. When there are a plurality of SL DRBs, each SL DRB corresponds to a different CAPC, to mitigate a problem that quality and fairness of SL-U communication are affected when no CAPC of the SL DRB is configured or a configured CAPC is inappropriate in a network, so as to ensure the quality of SL-U communication and fairness of transmission for different service requirements. In addition, in a scenario in which a default SL DRB is used, after obtaining a plurality of different default SL DRB configurations, the terminal device may correspondingly establish a plurality of default SL DRBs. Each of the plurality of different default SL DRB configurations is associated with a different CAPC configuration. In other words, CAPCs of all of the plurality of default SL DRBs correspondingly established by the terminal device based on the configurations are different. This can ensure that CAPCs corresponding to QoS flows transmitted on a same default SL DRB are the same, to ensure the quality of SL-U communication and the fairness of transmission for different service requirements.

To better understand the communication method provided in embodiments of this application, the following describes the technical solutions of the communication method provided in embodiments of this application with reference to more accompanying drawings.

For ease of clearly describing the technical solutions of this application, the technical solutions of this application are described in a plurality of embodiments in this application. For details, refer to the following. In this application, unless otherwise specified, for same or similar parts of embodiments or implementations, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The following implementations of this application are not intended to limit the protection scope of this application.

FIG. 5 is a schematic flowchart of a communication method according to an embodiment of this application. The method may be applied to a terminal device. The terminal device may be any terminal in FIG. 1 or a module used in the terminal. Alternatively, the terminal device may be any UE in FIG. 2, for example, the relay UE or the remote UE. Alternatively, the terminal device may be any UE in FIG. 3, for example, the source UE, the relay UE, or the target UE. In other words, the terminal device in FIG. 1, FIG. 2, and FIG. 3 may be configured to support and perform step S500 and step S501 in a method process shown in FIG. 5. Step S500 and step S501 are as follows:
Step S500: The UE obtains a first sidelink data radio bearer SL DRB configuration.

Specifically, the UE may obtain the first SL DRB configuration by using a SIB message, or obtain the first SL DRB configuration by using a preconfiguration message, or obtain the first SL DRB configuration by using RRC dedicated signaling. The first SL DRB configuration may include a CAPC configuration, or may include no CAPC configuration. This is not specifically limited herein.

Step S501: The UE determines a CAPC of an SL DRB based on one or more quality of service flows associated with the first SL DRB configuration.

Specifically, the UE may determine the CAPC of the SL DRB based on one or more QoS flows associated with a first SL DRB configuration. In other words, the UE may determine the CAPC of the SL DRB based on a QoS flow mapped to the SL DRB, where the SL DRB is established based on the first SL DRB configuration.

In a possible implementation, there is one SL DRB. In other words, the UE may determine a CAPC of the SL DRB based on one or more associated QoS flows. Specifically, the UE may first determine one or more CAPCs respectively corresponding to the one or more QoS flows associated with the first SL DRB configuration, and determine a target CAPC in the one or more CAPCs as the CAPC of the SL DRB. It should be noted that, after the CAPC of the SL DRB is determined, transmission of all of the one or more QoS flows may also be performed by using the SL DRB. Therefore, the UE determines, based on a plurality of QoS flows, the CAPC corresponding to the SL DRB, to mitigate a problem that quality and fairness of SL-U communication are affected when no CAPC of the SL DRB is configured or a configured CAPC is inappropriate in a network, so as to ensure the quality of SL-U communication and fairness of transmission for different service requirements.

Optionally, the target CAPC may include one or more of the following CAPCs:
(1) a CAPC of a quality of service flow having a smallest or largest packet delay budget in the one or more quality of service flows associated with the first SL DRB configuration, where for example, if there are three associated QoS flows (including f1, f2, and f3), a packet delay budget of f1 is the smallest and a packet delay budget of f3 is the largest, a CAPC corresponding to f1 or f3 may be determined as the CAPC of the SL DRB;
(2) a CAPC of a quality of service flow having a lowest or highest default priority level in the one or more quality of service flows associated with the first SL DRB configuration, where in the foregoing example, if a default priority level of f1 is the lowest and a default priority level of f3 is the highest, the CAPC corresponding to f1 or f3 may be determined as the CAPC of the SL DRB;
(3) a CAPC of a quality of service flow having a lowest or highest priority level in the one or more quality of service flows associated with the first SL DRB configuration, where in the foregoing example, if a priority level of f1 is the lowest and a priority level of f3 is the highest, the CAPC corresponding to f1 or f3 may be determined as the CAPC of the SL DRB;
(4) a CAPC of a quality of service flow having a smallest or largest packet error rate in the one or more quality of service flows associated with the first SL DRB configuration, where in the foregoing example, if a packet error rate of f1 is the smallest and a packet error rate of f3 is the largest, the CAPC corresponding to f1 or f3 may be determined as the CAPC of the SL DRB;
(5) a largest CAPC value, a smallest CAPC value, or a CAPC average value in the one or more CAPCs corresponding to the one or more quality of service flows associated with the first SL DRB configuration, where in the foregoing example, if the CAPC of f1 is 1, a CAPC of f2 is 2, and the CAPC of f3 is 3, the CAPC (1 or 3) corresponding to f1 or f3 or a CAPC average value (2) may be determined as the CAPC of the SL DRB; or
(6) a CAPC that corresponds to a largest quantity of quality of service flows and that is in the one or more CAPCs corresponding to the one or more quality of service flows associated with the first SL DRB configuration, where in the foregoing example, if the CAPC of f1 is 1, the CAPC of f2 is 1, and the CAPC of f3 is 3, the CAPC (1) corresponding to f1 and f2 may be determined as the CAPC of the SL DRB.

Optionally, a CAPC corresponding to each QoS flow may be determined in the following manners:
(1) If the QoS flow is a QoS flow corresponding to a standardized PQI, a CAPC corresponding to the QoS flow is a CAPC corresponding to the standardized PQI (in other words, the CAPC may be determined based on a mapping table between the standardized PQI and the CAPC).
(2) If the QoS flow is a QoS flow corresponding to a non-standardized PQI, a CAPC corresponding to the QoS flow may be determined in the following manner:
   ① If a priority level (priority level) of the non-standardized PQI falls within a preset range (or the QoS flow is a mission critical Mission Critical QoS flow), a CAPC of the QoS flow may be determined as 1 or 2. For example, if the priority level of the non-standardized PQI is 1 or 2 (that is, the preset range is 1 or 2), the CAPC of the QoS flow may be determined as 1 or 2.
   ② A CAPC of a standardized PQI having a PDB closest to a PDB of the QoS flow is determined as the CAPC of the QoS flow. The standardized PQI having the PDB closest to the PDB means that a difference between the PDB of the standardized PQI and the PDB of the QoS flow is the smallest. It may be understood that a CAPC of a standardized PQI having a characteristic closest to a characteristic such as a default priority level, a priority level, or a packet error rate of the QoS flow may alternatively be used as the CAPC of the QoS flow.

Optionally, the UE may first attempt to determine the CAPC of the QoS flow in the manner ①. When determining that the CAPC of the QoS flow cannot be determined in the manner ①, the UE may determine the CAPC of the QoS flow in the manner ②.

It should be noted that the target CAPC may be determined by the UE based on a combination of the foregoing manners. Alternatively, the target CAPC may be determined by the UE based on other service characteristics (such as a resource type, a default maximum data burst volume, and a default averaging window) of the one or more quality of service flows associated with the first SL DRB configuration or according to another rule (for example, configured and determined based on a network status). It may be understood that a quantity of QoS flows in the foregoing example may alternatively be a value other than 3. This is not specifically limited herein.

In a possible implementation, there are a plurality of SL DRBs (that is, at least two SL DRBs), and each of the at least two SL DRBs corresponds to a different CAPC. Specifically, the UE may determine a quantity of the at least two SL DRBs based on a quantity of CAPCs corresponding to the one or more QoS flows associated with the first SL DRB configuration, and establish the at least two SL DRBs. The quantity of the at least two SL DRBs may be greater than or equal to the quantity of the CAPCs corresponding to the one or more QoS flows associated with the first SL DRB configuration, and CAPCs of some or all of the at least two SL DRBs respectively correspond to the CAPCs of the one or more quality of service flows. For example, if the quantity of the CAPCs corresponding to the one or more QoS flows is 2 (where the quantity of QoS flows is not necessarily 2), a value of one CAPC is 1, and a value of the other CAPC is 2, the quantity of the at least two SL DRBs may be 2, a value of a CAPC of one SL DRB is 1, and a value of a CAPC of the other SL DRB is 2. It may be understood that the quantity of the at least two SL DRBs may alternatively be 3 or 4 (or even a larger value), provided that these SL DRBs include one SL DRB whose CAPC has a value of 1 and one SL DRB whose CAPC has a value of 2. A value of a CAPC of another SL DRB may be 1, 2, or another value. This is not specifically limited herein. Optionally, the at least two SL DRBs correspond to different CAPCs, and parameters other than the CAPCs may be the same (where logical channel identifiers LCIDs may also be different). It should be noted that the plurality of QoS flows may be QoS flows corresponding to a same destination (destination). It should be further noted that, if the UE establishes, based on a same SL DRB configuration, a plurality of SL DRBs whose CAPCs have a same value, the plurality of SL DRBs whose CAPCs have the same value may be distinguished by using different logical channel identifiers (LCIDs). Details are not described herein. Therefore, the UE establishes the plurality of SL DRBs based on the SL DRB configuration, so that transmission of a QoS flow corresponding to a CAPC is actually performed on each SL DRB, to ensure quality of SL-U communication and fairness of transmission for different service requirements.

In a possible implementation, in addition to step S500 and step S501, the process of the communication method provided in this embodiment of this application may further include step S502. Step S502: Determine that the first SL DRB configuration meets a first preset condition. Specifically, before determining the CAPC of the SL DRB, the UE may first determine whether the first SL DRB configuration meets the first preset condition. After determining that the first SL DRB configuration meets the first preset condition, the UE may determine the CAPC of the SL DRB based on the one or more QoS flows associated with a first SL DRB. The first preset condition may include one or more of the following conditions:
(1) The first SL DRB configuration is a default default SL DRB configuration;
(2) the first SL DRB configuration is obtained by using a system information block SIB or a preconfiguration message;
(3) the first SL DRB configuration does not provide a corresponding CAPC configuration; or
(4) a CAPC configuration provided by the first SL DRB configuration is inappropriate. (It may be understood that (3) and (4) do not occur simultaneously, and the first SL DRB configuration does not meet both (3) and (4).)

Further, that a CAPC configuration provided by the first SL DRB configuration is inappropriate means that: ① A plurality of quality of service flows associated with the first SL DRB configuration correspond to different CAPCs. ② A maximum difference between CAPCs corresponding to a plurality of quality of service flows associated with the first SL DRB configuration is greater than or equal to a first threshold. For example, if the first threshold is 2, and the CAPCs corresponding to the plurality of QoS flows associated with the first SL DRB configuration include a CAPC having a value of 1 and a CAPC having a value of 3, it may be considered that this condition is met, in other words, the CAPC configuration provided by the first SL DRB configuration is inappropriate, and the UE may determine that the first SL DRB configuration meets the first preset condition. ③ A quantity of a plurality of quality of service flows associated with the first SL DRB configuration is greater than or equal to a second threshold. To be specific, when the quantity of the plurality of quality of service flows associated with the first SL DRB configuration exceeds a specific quantity (for example, 5, that is, the second threshold is 5), the UE may also directly determine that the first SL DRB configuration meets the first preset condition. ④ A smallest value in CAPCs corresponding to a plurality of quality of service flows associated with the first SL DRB configuration is greater than a value of a CAPC provided by the first SL DRB configuration (or a highest priority level of the CAPCs corresponding to the plurality of quality of service flows associated with the first SL DRB configuration is lower than or equal to a priority level of the CAPC provided by the first SL DRB configuration). It should be noted that the first threshold and the second threshold may alternatively be other values. The first threshold or the second threshold may be predefined in a protocol, configured by a network (for example, configured by a base station by using RRC dedicated signaling or a SIB message), preconfigured, or configured by another UE. This is not specifically limited herein.

Optionally, when the first SL DRB configuration does not provide the corresponding CAPC configuration or the CAPC configuration provided by the first SL DRB configuration is inappropriate, the UE sends an indication message to an access network device (the base station), where the indication message indicates that the first SL DRB configuration does not provide the corresponding CAPC configuration or the CAPC configuration provided by the first SL DRB configuration is inappropriate; and the UE receives a second SL DRB configuration sent by the access network device, where the second SL DRB configuration is different from the first SL DRB configuration. Alternatively, when the first SL DRB configuration does not provide the corresponding CAPC configuration or the CAPC configuration provided by the first SL DRB configuration is inappropriate, if the terminal device is in a radio resource control RRC idle mode or an RRC inactive mode, the terminal device enters an RRC connected mode (for example, triggers execution of an RRC setup (RRC setup) process or an RRC resume (RRC resume) process); and receives a second SL DRB configuration sent by an access network device, where the second SL DRB configuration is different from the first SL DRB configuration. The indication message sent by the UE may be sent by the UE by using an SUI message when the UE enters the RRC connected mode or is in a mode 1 mode. Further, the indication message may also include the CAPC determined by the UE for the SL DRB. It should be noted that, that the second SL DRB configuration is different from the first SL DRB configuration may include a case in which only CAPC configurations are different but other configurations are the same, and a case in which the CAPC configurations are different and other configurations are also different. This is not specifically limited herein.

It should be noted that the plurality of QoS flows associated with the first SL DRB configuration may be understood as all QoS flows mapped to an SL DRB, or may be understood as a plurality of QoS flows that actually needs to be transmitted and that are in all QoS flows mapped to an SL DRB. The SL DRB is an SL DRB established based on the first SL DRB configuration. Alternatively, the plurality of QoS flows associated with the first SL DRB configuration may be understood as QoS flows that have data (in other words, have transmission requirements) and that are in a plurality of QoS flows associated with the current first SL DRB configuration. Optionally, the plurality of QoS flows may be a plurality of QoS flows corresponding to a same destination. In other words, the quantity of the plurality of QoS flows associated with the first SL DRB configuration may be greater than a quantity of QoS flows that is actually transmitted on the SL DRB. For example, the first SL DRB configuration is associated with a QoS flow 1, a QoS flow 2, and a QoS flow 3, but only the QoS flow 1 and the QoS flow 2 need to be transmitted on the SL DRB. In this case, the plurality of QoS flows may be the QoS flow 1 and the QoS flow 2, and do not include the QoS flow 3. This is not specifically limited herein.

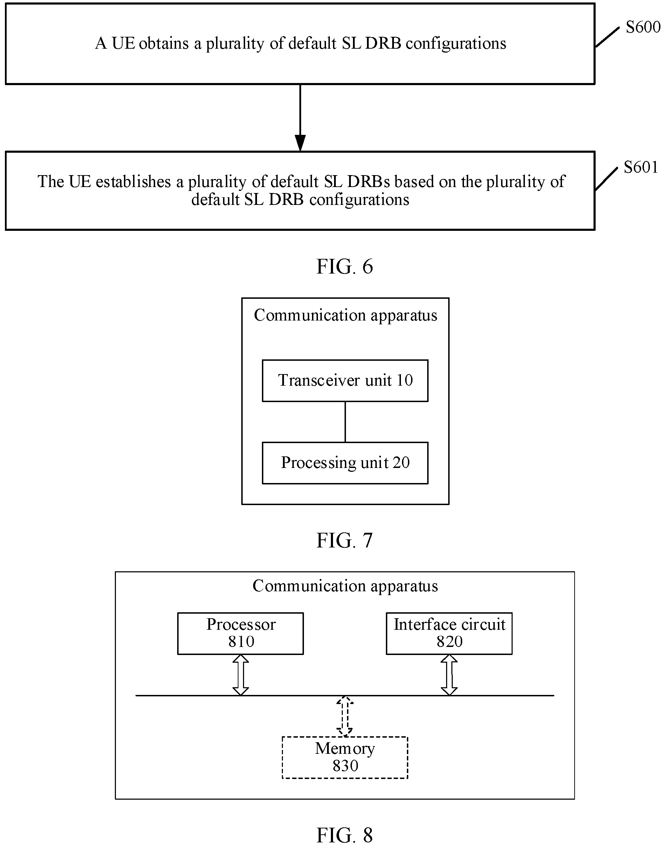

In a possible implementation, in addition to step S500 and step S501, the process of the communication method provided in this embodiment of this application may further include step S503 and step S504. Step S503: Obtain a plurality of default SL DRB configurations. Step S504: Establish a plurality of default SL DRBs based on the plurality of default SL DRB configurations. Each of the plurality of default SL DRB configurations is associated with a different CAPC configuration. In other words, step S500 to step S501 may be combined with another communication method provided in embodiments of this application. For descriptions of the another communication method, refer to related descriptions in FIG. 6. Details are not described herein.

FIG. 6 is a schematic flowchart of another communication method according to an embodiment of this application. The method may be applied to a terminal device, and the terminal device has a same meaning as the terminal device applied to FIG. 5. A method process shown in FIG. 6 includes step S600 and step S601. Step S600 and step S601 are as follows:
Step S600: The UE obtains a plurality of default SL DRB configurations.

Specifically, each of the plurality of default SL DRB configurations is associated with a different CAPC configuration. For example, the plurality of default SL DRB configurations include a first default SL DRB configuration, a second default SL DRB configuration, and a third default SL DRB configuration. A CAPC associated with the first default SL DRB configuration is 1, a CAPC associated with the second default SL DRB configuration is 2, and a CAPC associated with the third default SL DRB configuration is 3. For another example, the plurality of default SL DRB configurations include a first default SL DRB configuration, a second default SL DRB configuration, a third default SL DRB configuration, and a fourth default SL DRB configuration. A CAPC associated with the first default SL DRB configuration is 1, a CAPC associated with the second default SL DRB configuration is 2, a CAPC associated with the third default SL DRB configuration is 3, and a CAPC associated with the fourth default SL DRB configuration is 4. It should be noted that the plurality of default SL DRB configurations may be obtained by the UE by using a SIB message, a preconfiguration message, or RRC dedicated signaling. This is not specifically limited herein.

It may be understood that the plurality of default SL DRB configurations may alternatively include more or fewer default SL DRB configurations including different CAPC configurations. This is not specifically limited herein.

Optionally, the plurality of default SL DRB configurations may be specific to a same communication type. The communication type may include one or more of unicast, multicast, and broadcast.

Step S601: The UE establishes a plurality of default SL DRBs based on the plurality of default SL DRB configurations.

Specifically, the UE may establish one or more default SL DRBs based on each of the plurality of default SL DRB configurations. For ease of understanding, an example in which the UE establishes one default SL DRB based on each default SL DRB configuration is used. When a plurality of different CAPCs associated with the plurality of default SL DRB configurations are respectively 1, 2, and 3, the UE may establish three corresponding default SL DRBs. Values of CAPCs of the three default SL DRBs are respectively 1, 2, and 3, that is, the CAPCs correspond to CAPC configurations of the plurality of default SL DRB configurations.

In a possible implementation, in addition to step S600 and step S601 shown in FIG. 6, the communication method may further include step S602. Step S602: When no mapping rule of a corresponding SL DRB is configured for or stored in a to-be-transmitted quality of service flow, map the to-be-transmitted quality of service flow to a target default SL DRB in the plurality of default SL DRBs. A CAPC of the target default SL DRB is the same as a CAPC of the to-be-transmitted quality of service flow. For example, when a CAPC corresponding to a default SL DRB is 1, if no mapping rule of a corresponding SL DRB is configured for (or stored in) a QoS flow, and a CAPC corresponding to the QoS flow is 1, the QoS flow may be mapped to the default SL DRB. It may be understood that, for a default SL DRB of another CAPC, a manner of mapping a QoS flow to the default SL DRB is similar. Based on this, this method can ensure that CAPCs corresponding to a plurality of QoS flows transmitted on a same default SL DRB are the same, to ensure quality of SL-U communication and fairness of transmission for different service requirements. It should be noted that the mapping rule of the SL DRB may be an explicitly configured rule of mapping between a QoS flow and the SL DRB. It should be further noted that the UE may alternatively establish, based on a same default SL DRB configuration, a plurality of default SL DRBs whose CAPCs have a same value, and the plurality of default SL DRBs whose CAPCs have the same value may be distinguished by using different logical channel identifiers (LCIDs).

In conclusion, in comparison with a solution in which the UE performs transmission on a plurality of QoS flows by using an SL DRB configuration delivered or preconfigured by a base station, that is, by using a CAPC configuration that is of an SL DRB and that is delivered or preconfigured by the base station, in this embodiment of this application, after obtaining the SL DRB configuration, the UE may determine, based on one or more QoS flows associated with the SL DRB configuration, a CAPC of an SL DRB established based on the SL DRB configuration. There may be one or more established SL DRBs. The UE properly configures or properly determines, based on the one or more QoS flows, the CAPC corresponding to the SL DRB, to mitigate a problem that quality and fairness of SL-U communication are affected when no CAPC of the SL DRB is configured or a configured CAPC is inappropriate in a network, so as to ensure the quality of SL-U communication and fairness of transmission for different service requirements. In addition, in a scenario in which a default SL DRB is used, after obtaining a plurality of different default SL DRB configurations, the terminal device may correspondingly establish a plurality of default SL DRBs. Each of the plurality of different default SL DRB configurations is associated with a different CAPC configuration. In other words, CAPCs of all of the plurality of default SL DRBs correspondingly established by the terminal device based on the configurations are different. This can ensure that CAPCs corresponding to QoS flows transmitted on a same default SL DRB are the same, to ensure the quality of SL-U communication and the fairness of transmission for different service requirements. Therefore, in this embodiment of this application, performance and fairness of SL-U can be ensured.

It should be noted that the CAPC configuration in the foregoing embodiment may alternatively be equivalent to a logical channel priority level. In other words, a solution in which the UE may determine logical channel information, namely, a priority level, based on an associated service data should also fall within the protection scope of this application.

The foregoing describes the method in embodiments of this application in detail. The following provides several related apparatuses in embodiments of this application.

It may be understood that, to implement functions in the foregoing embodiments, the communication apparatus includes corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is executed through hardware or hardware driven by computer software depends on particular application scenarios and design constraint conditions of the technical solutions.

FIG. 7 is a diagram of a structure of a communication apparatus according to an embodiment of this application. The communication apparatus may be configured to implement functions of the UE or the access network device in the foregoing method embodiments, and therefore can also implement beneficial effects of the foregoing method embodiments. In this embodiment of this application, the communication apparatus may be one of the terminals 120a to 120j shown in FIG. 1, or may be a module (for example, a chip) used in a terminal, or may be the radio access network device 110a or 110b shown in FIG. 1.

As shown in FIG. 7, the communication apparatus includes a transceiver unit 10 and a processing unit 20. The communication apparatus may be configured to implement functions of the UE or the access network device (base station) in the method embodiments shown in FIG. 5 and FIG. 6.

When the communication apparatus is configured to implement the functions of the UE in the method embodiment shown in FIG. 5, the transceiver unit 10 may be configured to obtain a first sidelink data radio bearer SL DRB configuration; and the processing unit 20 may be configured to determine a CAPC of an SL DRB based on one or more quality of service flows associated with the first SL DRB configuration, where the SL DRB is an SL DRB established based on the first SL DRB configuration.

In a possible implementation, there is one SL DRB.

In a possible implementation, there are at least two SL DRBs, and each of the at least two SL DRBs has a different CAPC.

In a possible implementation, the processing unit 20 is specifically configured to determine, as the CAPC of the SL DRB, a target CAPC in one or more CAPCs corresponding to the one or more quality of service flows associated with the first SL DRB configuration.

In a possible implementation, the target CAPC includes any one or more of the following CAPCs:
a CAPC of a quality of service flow having a smallest or largest packet delay budget in the one or more quality of service flows associated with the first SL DRB configuration;
a CAPC of a quality of service flow having a lowest or highest default priority level in the one or more quality of service flows associated with the first SL DRB configuration;
a CAPC of a quality of service flow having a lowest or highest priority level in the one or more quality of service flows associated with the first SL DRB configuration;
a CAPC of a quality of service flow having a smallest or largest packet error rate in the one or more quality of service flows associated with the first SL DRB configuration;
a largest CAPC value, a smallest CAPC value, or a CAPC average value in the one or more CAPCs corresponding to the one or more quality of service flows associated with the first SL DRB configuration; or
a CAPC that corresponds to a largest quantity of quality of service flows and that is in the one or more CAPCs corresponding to the one or more quality of service flows associated with the first SL DRB configuration.

In a possible implementation, the processing unit 20 is specifically configured to determine a quantity of the at least two SL DRBs based on a quantity of different CAPCs corresponding to the one or more quality of service flows associated with the first SL DRB configuration, and establish the at least two SL DRBs, where CAPCs of the at least two SL DRBs respectively correspond to the CAPCs of the one or more quality of service flows.

In a possible implementation, the processing unit 20 is further configured to determine that the first SL DRB configuration meets a first preset condition, where the first preset condition includes one or more of the following conditions:
the first SL DRB configuration is a default default SL DRB configuration;
the first SL DRB configuration is obtained by using a system information block SIB or a preconfiguration message;
the first SL DRB configuration does not provide a corresponding CAPC configuration; or
a CAPC configuration provided by the first SL DRB configuration is inappropriate.

In a possible implementation, that a CAPC configuration provided by the first SL DRB configuration is inappropriate includes one or more of the following:
a plurality of quality of service flows associated with the first SL DRB configuration correspond to different CAPCs;
a maximum difference between CAPCs corresponding to a plurality of quality of service flows associated with the first SL DRB configuration is greater than or equal to a first threshold;
a quantity of a plurality of quality of service flows associated with the first SL DRB configuration is greater than or equal to a second threshold; or
a smallest value in CAPCs corresponding to a plurality of quality of service flows associated with the first SL DRB configuration is greater than a value of a CAPC provided by the first SL DRB configuration.

In a possible implementation, the transceiver unit 10 is further configured: when the first SL DRB configuration does not provide the corresponding CAPC configuration or the CAPC configuration provided by the first SL DRB configuration is inappropriate, send an indication message to an access network device, where the indication message indicates that the first SL DRB configuration does not provide the corresponding CAPC configuration or the CAPC configuration provided by the first SL DRB configuration is inappropriate; and receive a second SL DRB configuration sent by the access network device, where the second SL DRB configuration is different from the first SL DRB configuration; or
when the first SL DRB configuration does not provide the corresponding CAPC configuration or the CAPC configuration provided by the first SL DRB configuration is inappropriate, if the terminal device is in a radio resource control RRC idle mode or an RRC inactive mode, enter an RRC connected mode; and receive a second SL DRB configuration sent by an access network device, where the second SL DRB configuration is different from the first SL DRB configuration.

In a possible implementation, the one or more quality of service flows associated with the first SL DRB configuration include a quality of service flow corresponding to a non-standardized PC5 quality of service identifier, and the processing unit 20 is further configured to determine, based on a characteristic parameter of the quality of service flow corresponding to the non-standardized PC5 quality of service identifier, a CAPC of the quality of service flow corresponding to the non-standardized PC5 quality of service identifier, where the characteristic parameter indicates a quality of service characteristic of the quality of service flow corresponding to the non-standardized PC5 quality of service identifier, and the characteristic parameter includes one or more of a packet delay budget, a default priority level, a priority level, and a packet error rate.

In a possible implementation, the transceiver unit 10 is further configured to obtain a plurality of default SL DRB configurations, where each of the plurality of default SL DRB configurations is associated with a different CAPC configuration.

The processing unit 20 is further configured to establish a plurality of default SL DRBs based on the plurality of default SL DRB configurations.

In a possible implementation, the processing unit 20 is further specifically configured to: when no mapping rule of a corresponding SL DRB is configured for or stored in a to-be-transmitted quality of service flow, map the to-be-transmitted quality of service flow to a target default SL DRB in the plurality of default SL DRBs, where a CAPC of the target default SL DRB is the same as a CAPC of the to-be-transmitted quality of service flow.

When the communication apparatus is configured to implement the functions of the access network device (base station) in the method embodiment shown in FIG. 5, the transceiver unit 10 is configured to receive an indication message sent by a terminal device, and/or send a second SL DRB configuration to the terminal device. The processing unit 20 may be configured to determine and generate the second SL DRB configuration.

In a possible implementation, the transceiver unit 10 is further configured to send a plurality of default SL DRB configurations, where each of the plurality of default SL DRB configurations is associated with a different CAPC configuration.

When the communication apparatus is configured to implement the functions of the UE in the method embodiment shown in FIG. 6, the transceiver unit 10 is configured to obtain a plurality of default SL DRB configurations, where each of the plurality of default SL DRB configurations is associated with a different CAPC configuration; and the processing unit 20 is configured to establish the plurality of default SL DRBs based on the plurality of default SL DRB configurations.

In a possible implementation, the processing unit 20 is further configured to: when no mapping rule of a corresponding SL DRB is configured for or stored in a to-be-transmitted quality of service flow, map the to-be-transmitted quality of service flow to a target default SL DRB in the plurality of default SL DRBs, where a CAPC of the target default SL DRB is the same as a CAPC of the to-be-transmitted quality of service flow.

When the communication apparatus is configured to implement the functions of the access network device (base station) in the method embodiment shown in FIG. 6, the transceiver unit 10 is configured to send a plurality of default SL DRB configurations, where each of the plurality of default SL DRB configurations is associated with a different CAPC configuration; and the processing unit 20 may be configured to determine and generate the plurality of default SL DRB configurations.

FIG. 8 is a diagram of another structure of a communication apparatus according to an embodiment of this application. As shown in FIG. 8, the communication apparatus includes a processor 810 and an interface circuit 820. The processor 810 and the interface circuit 820 are coupled to each other. It may be understood that the interface circuit 820 may be a transceiver or an input/output interface. Optionally, the communication apparatus may further include a memory 830, configured to store instructions to be executed by the processor 810, or store input data required by the processor 810 to run the instructions, or store data generated after the processor 810 runs the instructions.

When the communication apparatus is configured to implement the method shown in FIG. 5 or FIG. 6, the processor 810 is configured to implement functions of the processing unit 20, and the interface circuit 820 is configured to implement functions of the transceiver unit 10.

When the communication apparatus is a chip used in a terminal, the chip in the terminal implements functions of the UE or the access network device (base station) in the foregoing method embodiments. The chip in the terminal receives information from another module (for example, a radio frequency module or an antenna) in the terminal, where the information is sent by another device to the terminal. Alternatively, the chip in the terminal sends information to another module (for example, a radio frequency module or an antenna) in the terminal, where the information is sent by the terminal to another device.

It may be understood that a processor 810 in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor.

An embodiment of this application further provides a computer-readable storage medium. The computer-readable storage medium stores computer program code. When a processor executes the computer program code, a computer is enabled to perform the method in any one of the foregoing embodiments.

An embodiment of this application further provides a terminal device. The terminal device may exist in a product form of a chip. The terminal device includes a processor, and the processor is configured to support the terminal device in implementing a corresponding function in the method in any one of the foregoing embodiments. The terminal device may further include a memory. The memory is configured to be coupled to the processor, and stores program instructions and data that are necessary for the terminal device. The terminal device may further include a communication interface, configured to implement communication between the terminal device and another device or a communication network.

An embodiment of this application further provides a computer program product. When the computer program product is run on a computer, the computer is enabled to perform the method in any of the foregoing embodiments.

An embodiment of this application provides a chip system. The chip system includes a processor, configured to support a device in implementing a function in the first aspect, for example, generating or processing information in the method for transferring a register parameter of the block instruction. In a possible design, the chip system further includes a memory, and the memory is configured to store program instructions and data that are necessary for the device. The chip system may include a chip, or may include a chip and another discrete component.

In the foregoing embodiments, the descriptions of each embodiment have respective focuses. For a part that is not described in detail in an embodiment, refer to related descriptions in other embodiments.

It should be noted that, for brief description, the foregoing method embodiments are represented as a series of actions. However, a person skilled in the art should appreciate that this application is not limited to the described order of the actions, because according to this application, some steps may be performed in other orders or simultaneously. It should be further appreciated by a person skilled in the art that embodiments described in this specification all belong to example embodiments, and the involved actions and modules are not necessarily required by this application.

In the several embodiments provided in this application, it should be understood that the disclosed apparatus may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The foregoing units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments in this application.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the foregoing integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device, specifically, may be a processor in the computer device) to perform all or some of the steps of the methods described in embodiments of this application. The foregoing storage medium may include: any medium that can store program code, such as a USB flash drive, a removable hard disk, a magnetic disk, an optical disc, a read-only memory (Read-Only Memory, ROM for short), or a random access memory (Random Access Memory, RAM for short).

The foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A communication method, applied to a terminal device, wherein the method comprises:
obtaining a first sidelink data radio bearer SL DRB configuration; and
determining a CAPC of an SL DRB based on one or more quality of service flows associated with the first SL DRB configuration, wherein the SL DRB is an SL DRB established based on the first SL DRB configuration.

2. The method according to claim 1, wherein there is one SL DRB.

3. The method according to claim 1, wherein there are at least two SL DRBs, and each of the at least two SL DRBs has a different CAPC.

4. The method according to claim 2, wherein the method further comprises:
determining, as the CAPC of the SL DRB, a target CAPC in one or more CAPCs corresponding to the one or more quality of service flows associated with the first SL DRB configuration.

5. The method according to claim 4, wherein the target CAPC comprises any one or more of the following CAPCs:
a CAPC of a quality of service flow having a smallest or largest packet delay budget in the one or more quality of service flows associated with the first SL DRB configuration;
a CAPC of a quality of service flow having a lowest or highest default priority level in the one or more quality of service flows associated with the first SL DRB configuration;
a CAPC of a quality of service flow having a lowest or highest priority level in the one or more quality of service flows associated with the first SL DRB configuration;
a CAPC of a quality of service flow having a smallest or largest packet error rate in the one or more quality of service flows associated with the first SL DRB configuration;
a largest CAPC value, a smallest CAPC value, or a CAPC average value in the one or more CAPCs corresponding to the one or more quality of service flows associated with the first SL DRB configuration; or
a CAPC that corresponds to a largest quantity of quality of service flows and that is in the one or more CAPCs corresponding to the one or more quality of service flows associated with the first SL DRB configuration.

6. The method according to claim 3, wherein the method further comprises:
determining a quantity of the at least two SL DRBs based on a quantity of different CAPCs corresponding to the one or more quality of service flows associated with the first SL DRB configuration, and establishing the at least two SL DRBs, wherein CAPCs of the at least two SL DRBs respectively correspond to the CAPCs of the one or more quality of service flows.

7. The method according to any one of claims 1 to 6, wherein the method further comprises:
determining that the first SL DRB configuration meets a first preset condition, wherein the first preset condition comprises one or more of the following conditions:
the first SL DRB configuration is a default SL DRB configuration;
the first SL DRB configuration is obtained by using a system information block SIB or a preconfiguration message;
the first SL DRB configuration does not provide a corresponding CAPC configuration; or
a CAPC configuration provided by the first SL DRB configuration is inappropriate.

8. The method according to claim 7, wherein that a CAPC configuration provided by the first SL DRB configuration is inappropriate comprises one or more of the following:
a plurality of quality of service flows associated with the first SL DRB configuration correspond to different CAPCs;
a maximum difference between CAPCs corresponding to a plurality of quality of service flows associated with the first SL DRB configuration is greater than or equal to a first threshold;
a quantity of a plurality of quality of service flows associated with the first SL DRB configuration is greater than or equal to a second threshold; or
a smallest value in CAPCs corresponding to a plurality of quality of service flows associated with the first SL DRB configuration is greater than a value of a CAPC provided by the first SL DRB configuration.

9. The method according to either of claims 7 and 8, wherein the method further comprises:
when the first SL DRB configuration does not provide the corresponding CAPC configuration or the CAPC configuration provided by the first SL DRB configuration is inappropriate, sending an indication message to an access network device, wherein the indication message indicates that the first SL DRB configuration does not provide the corresponding CAPC configuration or the CAPC configuration provided by the first SL DRB configuration is inappropriate; and receiving a second SL DRB configuration sent by the access network device, wherein the second SL DRB configuration is different from the first SL DRB configuration; or
when the first SL DRB configuration does not provide the corresponding CAPC configuration or the CAPC configuration provided by the first SL DRB configuration is inappropriate, if the terminal device is in a radio resource control RRC idle mode or an RRC inactive mode, entering an RRC connected mode; and receiving a second SL DRB configuration sent by an access network device, wherein the second SL DRB configuration is different from the first SL DRB configuration.

10. The method according to any one of claims 1 to 9, wherein the one or more quality of service flows associated with the first SL DRB configuration comprise a quality of service flow corresponding to a non-standardized PC5 quality of service identifier, and the method further comprises:
determining, based on a characteristic parameter of the quality of service flow corresponding to the non-standardized PC5 quality of service identifier, a CAPC of the quality of service flow corresponding to the non-standardized PC5 quality of service identifier, wherein the characteristic parameter indicates a quality of service characteristic of the quality of service flow corresponding to the non-standardized PC5 quality of service identifier, and the characteristic parameter comprises one or more of a packet delay budget, a default priority level, a priority level, and a packet error rate.

11. The method according to any one of claims 1 to 10, wherein the one or more quality of service flows associated with the first SL DRB configuration comprise the quality of service flow corresponding to the non-standardized PC5 quality of service identifier, and the method further comprises:
determining, as the CAPC of the quality of service flow corresponding to the non-standardized PC5 quality of service identifier, a CAPC corresponding to a standardized PC5 quality of service identifier closest to the packet delay budget of the quality of service flow corresponding to the non-standardized PC5 quality of service identifier.

12. The method according to any one of claims 1 to 11, wherein the method further comprises:
obtaining a plurality of default SL DRB configurations, wherein each of the plurality of default SL DRB configurations is associated with a different CAPC configuration; and
establishing a plurality of default SL DRBs based on the plurality of default SL DRB configurations.

13. The method according to claim 12, wherein the method further comprises:
when no mapping rule of a corresponding SL DRB is configured for or stored in a to-be-transmitted quality of service flow, mapping the to-be-transmitted quality of service flow to a target default SL DRB in the plurality of default SL DRBs, wherein a CAPC of the target default SL DRB is the same as a CAPC of the to-be-transmitted quality of service flow.

14. A communication method, applied to an access network device, wherein the method comprises:
receiving an indication message sent by a terminal device, and/or sending a second SL DRB configuration to the terminal device.

15. A communication method, applied to a terminal device, wherein the method comprises:
obtaining a plurality of default SL DRB configurations, wherein each of the plurality of default SL DRB configurations is associated with a different CAPC configuration; and
establishing a plurality of default SL DRBs based on the plurality of default SL DRB configurations.

16. The method according to claim 15, wherein the method further comprises:
when no mapping rule of a corresponding SL DRB is configured for or stored in a to-be-transmitted quality of service flow, mapping the to-be-transmitted quality of service flow to a target default SL DRB in the plurality of default SL DRBs, wherein a CAPC of the target default SL DRB is the same as a CAPC of the to-be-transmitted quality of service flow.

17. A communication method, applied to an access network device, wherein the method comprises:
sending a plurality of default SL DRB configurations, wherein each of the plurality of default SL DRB configurations is associated with a different CAPC configuration.

18. A communication apparatus, comprising a processor and an interface circuit, wherein the interface circuit is configured to receive a signal from another communication apparatus and transmit the signal to the processor, or send a signal from the processor to another communication apparatus, and the processor is configured to implement the method according to any one of claims 1 to 17 by using a logic circuit or by executing code instructions.

19. A computer-readable storage medium, wherein the storage medium stores a computer program or instructions, and when the computer program or the instructions are executed by a communication apparatus, the method according to any one of claims 1 to 17 is implemented.

20. A computer program, wherein the computer program comprises instructions, and when the computer program is executed by a communication apparatus, the method according to any one of claims 1 to 17 is implemented.
